**Europäisches Patentamt**

**European Patent Office**

**Office européen des brevets**

(19)

(11) Numéro de publication : **0 677 935 A1**

# (12) DEMANDE DE BREVET EUROPEEN

(21) Numéro de dépôt : **95400819.9**

(22) Date de dépôt : **11.04.95**

(51) Int. Cl.⁶ : **H04J 14/02, H04L 12/437, H04J 3/08**

(30) Priorité : **13.04.94 FR 9404375**

(43) Date de publication de la demande :
**18.10.95 Bulletin 95/42**

(84) Etats contractants désignés :
**DE GB**

(71) Demandeur : **FRANCE TELECOM**
**6, Place d'Alleray**
**F-75015 Paris (FR)**

(72) Inventeur : **Hamel, André**
**6, rue du Mouton Blanc**
**F-22300 Lannion (FR)**

(74) Mandataire : **Dubois-Chabert, Guy et al**
**Société de Protection des Inventions**
**25, rue de Ponthieu**
**F-75008 Paris (FR)**

(54) **Architecture de réseau en boucle de transmission à accès multiple par routage spectral.**

(57) L'invention concerne une architecture de réseau en boucle de transmission à accès multiple par routage spectral comprenant un réseau général relié à au moins une boucle secondaire, plusieurs stations réparties sur chaque boucle secondaire récupérant leurs informations par l'extraction et l'insertion de la (ou des) longueur(s) d'onde qui leurs sont assignées, dans laquelle chaque boucle secondaire est une boucle optique fermée à au moins un noeud d'accès du réseau général.

Application notamment dans les réseaux de télécommunication et dans les réseaux informatiques.

FIG. 2

EP 0 677 935 A1

## Domaine technique

La présente invention concerne une architecture de réseau en boucle de transmission à accès multiple par routage spectral.

L'invention trouve notamment une application dans les réseaux informatiques et d'autres types de réseaux à support optique.

## Etat de la technique antérieure

Certains réseaux de transmission sont organisés en boucles. Ils comprennent un réseau général et plusieurs boucles. Chaque boucle comprend un circuit appelé tête de réseau (ou BRX), qui est un circuit brasseur-répartiteur, et plusieurs circuits multiplexeurs à insertion et extraction (ou MIE). Chacun de ces multiplexeurs est disposé dans une zone locale à desservir. Une double liaison véhicule les données entre la tête de réseau et les multiplexeurs, dans deux sens différents.

De tels réseaux en boucles sont bien adaptés à la technique de transmission dite "hiérarchie numérique synchrone" ou HNS en abrégé (SDH en anglais, pour "Synchronous Digital Hierarchy"). Cette technique est définie dans la recommandation G708 du CCITT "Interface de noeud de réseau pour la hiérarchie numérique synchrone".

Des équipements réalisés en technologie électronique sont actuellement à l'état de prototypes industriels. Une famille d'équipements compatibles avec la HNS est décrite par exemple dans l'article de P. Anache et al., intitulé "Famille d'équipements de transmission synchrone", publié dans "Commutation et Transmission", N° 3, 1991, pages 39 à 51.

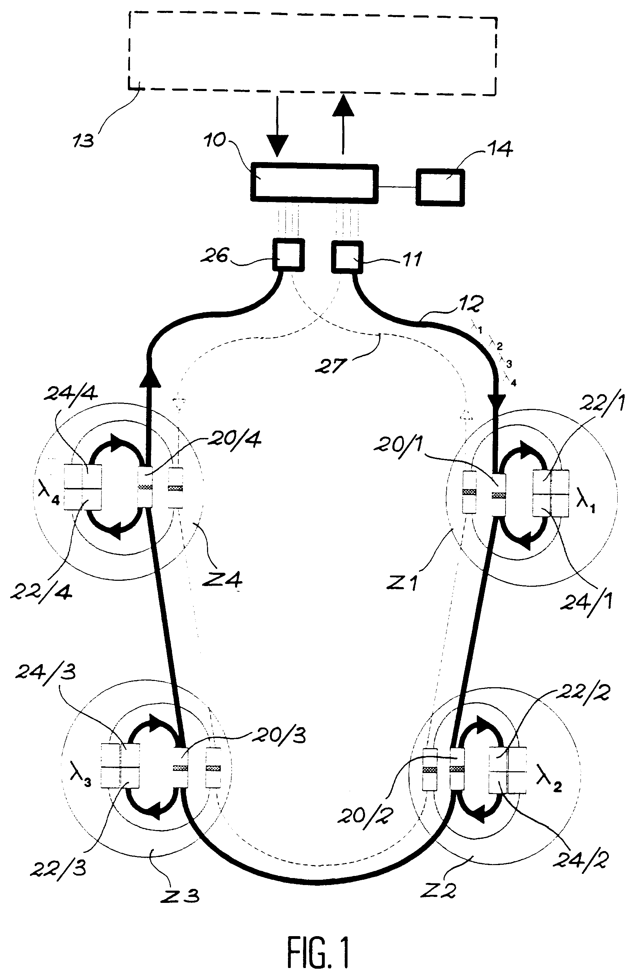

D'autres équipements en technologie optique ont fait l'objet de publications. Une boucle optique de principe est illustrée sur la figure 1, dans le cas de quatre zones locales. La tête de réseau comprend un circuit BRX 10 couplé au réseau général 13 et piloté par un circuit 14. Elle traite des données électriques. Associé à ce circuit BRX 10 se trouve un émetteur 11 délivrant des faisceaux optiques à des longueurs d'onde différentes, qui sont multiplexés et introduits dans une fibre optique monomode 12. Chaque zone Z1, Z2, Z3, Z4 comprend un multiplexeur d'insertion et d'extraction constitué d'un composant optique 20/1, 20/2, 20/3, 20/4 du genre coupleur, ce composant étant apte à extraire une ou plusieurs longueurs d'onde pour les adresser à un récepteur 22/1, 22/2, 22/3, 22/4. Ces moyens remplissent la fonction d'extraction des données.

Quant à la fonction d'insertion, elle est remplie par des émetteurs 24/1, 24/2, 24/3, 24/4 disposés dans les zones locales et le composant 20/1, 20/2, 20/3, 20/4 et permet d'insérer dans le faisceau circulant sur la fibre optique 12, des données provenant de chaque zone locale, à la place des données extraites.

La boucle se referme sur la tête de réseau, après démultiplexage, qui sépare les différents faisceaux de longueurs d'onde différentes, par un récepteur 26, qui délivre les données sous forme électrique et les adresse au circuit brasseur BRX 10.

Une deuxième fibre optique de secours 27, représentée sur la figure 1, est ajoutée pour constituer, avec les composants optiques appropriés (coupleur, récepteur, émetteur) une boucle de secours qui peut fonctionner en sens inverse de la boucle principale.

Dans un article de A.F. Elrefaie et al. intitulé "Fibre Amplifiers in Closed-Ring WDM Networks", publié dans Electronics Letters, volume 28, N° 25, 1992, pages 2340-2341, il est décrit une boucle de ce type dans laquelle les moyens d'extraction et d'insertion sont des réseaux de diffraction capables d'extraire cinq longueurs d'onde parmi trente. Les longueurs d'onde s'étalent entre 1538nm et 1566 nm, tous les deux nanomètres (soit sur une trentaine de nanomètres pour quinze canaux). Chaque réseau de diffraction est capable d'extraire cinq longueurs d'onde de l'ensemble. Par exemple, pour la deuxième zone locale, le réseau extrait les longueurs d'onde à 1558, 1560, 1562, 1564 et 1566 nm.

Un article de M.I. Irshid et al. intitulé "A Fully Transparent Fiber-Optic Ring Architecture for WDM Networks", publié dans Journal of Lightwave Technology, volume 10, N° 1, janvier 1992, pages 101 à 108, décrit encore un système de ce genre, mais avec un filtre acousto-optique comme moyen d'extraction et d'insertion.

Ainsi les applications du routage spectral aux architectures de réseau en boucle unidirectionnelle ou bidirectionnelle sont connues au travers notamment de ces deux articles de Elrefaie et al et de Irshid et al. Dans la boucle unidirectionnelle illustrée à la figure 1, toutes les stations sont connectées à un multiplexeur optique qui assure la fonction insertion-extraction d'une longueur d'onde et la continuité optique est assurée le long de la boucle. Les informations sont envoyées sur la boucle normale et sur la boucle de secours, ce qui garantit la transmission même en cas de rupture simple d'artère. Dans cette réalisation, toutes les informations transitent par la tête de réseau qui assure une fonction de brassage afin de permettre la mise en communication de deux stations entre elles ou d'envoyer les informations dans le réseau général. Une telle solution présente une grande fragilité car le fonctionnement de la boucle est totalement interrompu en cas de défaillance au niveau de la tête du réseau; il n'y a pas de protection contre ce défaut. Une autre solution peut consister à installer deux équipements de brassage mais c'est une solution coûteuse et, avec un seul point d'introduction dans le réseau, le même aspect sécurité se pose au point d'insertion.

La présente invention a justement pour but de remédier à ces inconvénients.

## Exposé de l'invention

Selon l'invention, l'architecture de réseau en boucle de transmission à accès multiple par routage spectral comprend un réseau relié à au moins une boucle secondaire, au moins deux stations réparties sur chaque boucle secondaire récupérant leurs informations par l'extraction et l'insertion d'au moins une longueur d'onde qui leur est assignée, caractérisée en ce que chaque boucle secondaire, qui est une boucle optique fermée, a deux noeuds d'accès sur une ligne de transmission ou un arc d'une boucle principale du réseau, et des stations, recevant un flux d'informations à partir de ces noeuds d'accès, avec une capacité de trafic d'au moins un affluent par station, et en ce que le trafic de chaque boucle secondaire est réparti entre ces deux noeuds d'accès, qui sont installés en des endroits quelconques sur celle-ci.

Avantageusement l'architecture de l'invention comprend au moins une boucle principale et au moins deux boucles secondaires ayant toutes deux au moins un point d'accès à la boucle principale.

Avantageusement chaque station de chaque boucle secondaire dispose d'au moins deux longueurs d'onde.

Avantageusement l'architecture de l'invention comprend une boucle principale pour le trafic entre le réseau général et les boucles secondaires et une seconde boucle principale pour le trafic d'interconnexion entre les stations des boucles secondaires.

Avantageusement chaque boucle principale ou secondaire dispose d'une boucle de secours.

## Brève description des dessins

- La figure 1, déjà décrite, montre la structure d'une boucle optique de l'art antérieur;
- les figures 2 et 3 montrent des architectures de réseau en boucle de transmission à accès multiple par routage spectral selon l'invention;
- les figures 4 à 7 illustrent différentes réalisations de modules utilisés dans les architectures illustrées aux figures 2 et 3;
- la figure 8 illustre une variante de réalisation de l'architecture de l'invention;
- la figure 9 illustre un exemple de réalisation expérimentale de l'architecture illustrée à la figure 3.

## Exposé détaillé de modes de réalisation

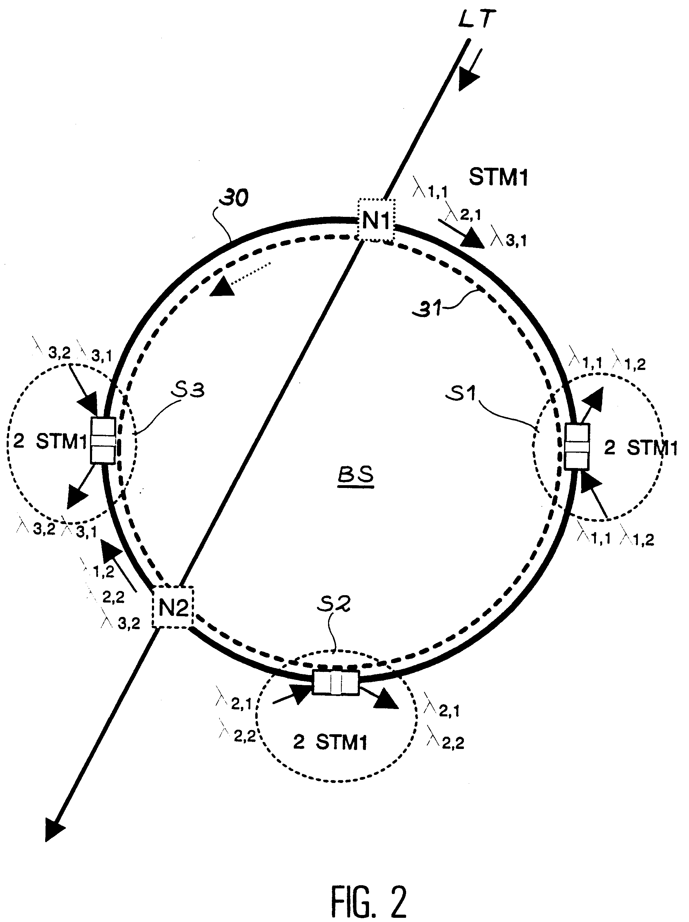

La figure 2 illustre une architecture de réseau en boucle de transmission à accès multiple par routage spectral selon l'invention. Ce routage spectral est implanté sur une boucle optique fermée 30. Des stations S1, S2, S3 sont réparties sur cette boucle. Elles récupèrent leurs informations par l'extraction et l'insertion de la longueur d'onde qui leur est assignée. Des noeuds N1, N2, qui assurent le fonctionnement de la boucle par leur fonction de brassage, sont installés en des endroits quelconques sur la boucle. Le lieu d'implantation de chaque noeud ne modifie pas la fonctionnalité de la boucle mais intervient sur le budget optique des liaisons installées.

La figure 2 présente une boucle secondaire BS à deux noeuds d'accès sur une ligne de transmission LT ou arc d'une boucle principale. Une fibre optique de secours 31 est représentée en tirets mais les moyens qui lui sont associés ne sont pas représentés explicitement. Si la boucle secondaire comprend n stations avec une capacité de trafic de m affluents par station, la capacité totale de la boucle est de $n*m$ affluents. Dans le cas d'une boucle à p noeuds d'accès, la capacité minimale d'un noeud est de $n*m/p$ affluents. On suppose des noeuds de même capacité. Toute capacité supplémentaire des noeuds peut être utilisée en secours pour augmenter le niveau de protection de la boucle contre une rupture de noeud. On verra que des solutions reconfigurables permettent d'orienter une partie du trafic vers un autre noeud en cas de panne. Dans le cas d'une application à un réseau de transmission selon la "Hiérarchie Numérique Synchrone", les affluents peuvent être une trame au débit de 155 Mbits/s (STM1) ou un autre niveau de transmission tel que STM4 (620 Mbit/s) ou même STM 16 (2,5 Gbit/s). Mais ce débit élevé entraîne des contraintes qu'il faut prendre en compte (budget de liaison, dispersion chromatique de la fibre, élargissement spectral de la source par la modulation ...). Dans les applications de routage spectral en boucle pour les télécommunications, on privilégie l'affluent STM1 qui est la cellule de base de cette norme de transmission, l'abréviation STM signifiant "Synchronous Transfert Module".

La figure 2 présente une boucle secondaire de trois stations S1, S2, S3 où chaque station reçoit un flux d'informations STM1 en provenance des deux noeuds N1 et N2. Si les flux en provenance de ces deux noeuds transportent les mêmes informations sous deux longueurs d'onde différentes, la boucle est protégée à 100 % contre la panne d'un noeud. Dans le cas d'une boucle secondaire à n stations, le trafic est dans ce cas doublé sur l'axe principal et, parmi le peigne de longueurs d'onde qui circule sur l'axe principal, 2n longueurs d'onde sont utilisées pour cette boucle secondaire. Au premier noeud N1, n longueurs d'onde ($\lambda_{1,1}$, $\lambda_{i,1}$, $\lambda_{n,1}$) sont prélevées et les autres longueurs d'onde sont prélevées au niveau du noeud N2 ($\lambda_{1,2}$, $\lambda_{i,2}$, $\lambda_{n,2}$). Chaque affluent i est transmis sous deux longueurs d'onde $\lambda_{i,1}$ et $\lambda_{i,2}$ sur la boucle normale et sur la boucle de secours. Au niveau du récepteur, la station choisit une des deux longueurs d'onde sur la boucle normale, ou sur la boucle secours s'il y a rupture du câble.

Par une démarche analogue, une boucle secondaire comportant n stations (extension de la figure 2 à n stations) a une capacité de trafic de 2n affluents qui sont protégés à 50 % contre une panne de noeud si les 2n affluents différents transitent sur la ligne de transmission sur 2n longueurs d'onde.

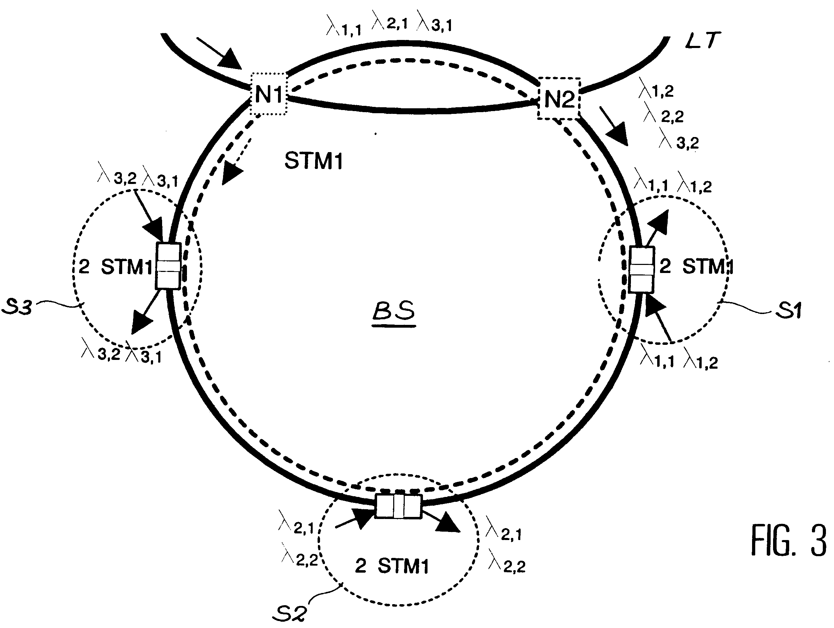

La figure 3 donne un exemple d'une boucle secondaire BS à trois stations où les deux noeuds sont séparés de quelques kilomètres et implantés entre deux stations. Cette solution augmente la capacité de transmission de la boucle et, si le trafic est réparti sur les deux noeuds d'accès, le trafic de la boucle est assuré à 50 % en cas de défaillance d'un noeud.

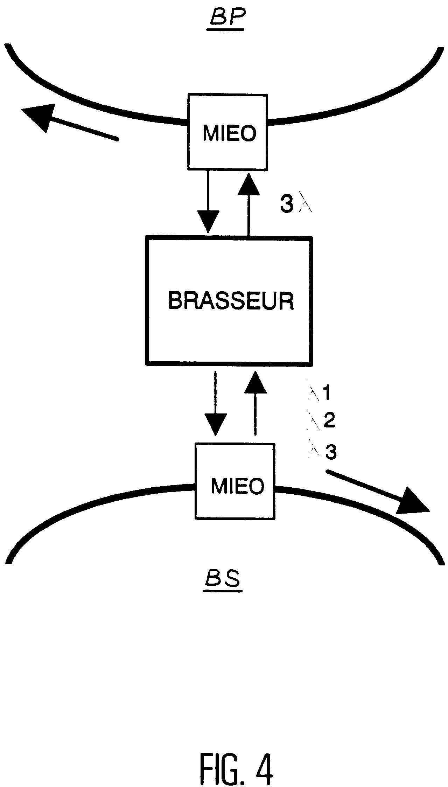

Un noeud N1 ou N2 est constitué de composants passifs optiques pour assurer l'extraction puis l'insertion des longueurs d'onde qui transitent sur la ligne de transmission et portent les informations destinées à la boucle secondaire. La figure 4 représente la structure fonctionnelle d'un noeud entre une boucle principale BP et une boucle secondaire BS, avec des composants optiques qui assurent le rôle de multiplexeur à insertion extraction optique (MIEO).

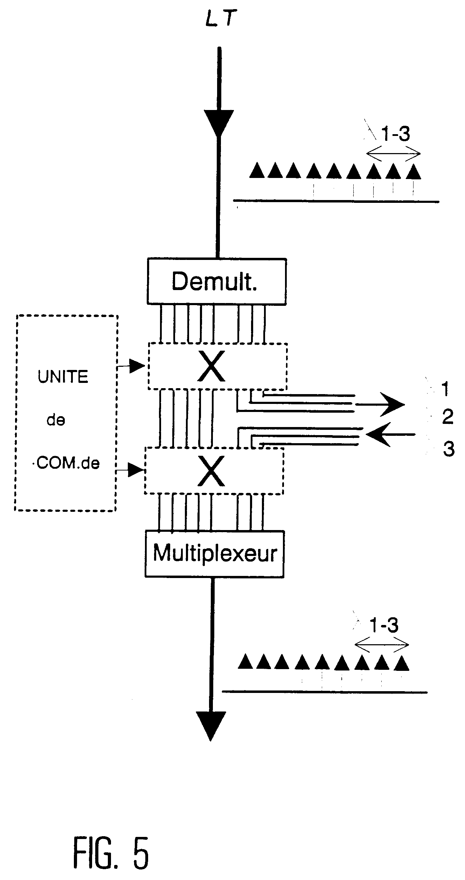

La figure 5 représente une solution en technologie spatiale à base de multiplexeur optique à réseau de diffraction ou à réseau de guides tel que décrit par exemple dans un article intitulé "Novel Photonic Integrated Circuits for Wavelength Routing in WDM Networks" de Martin Zirngibl (ATT Bell Labs., Ecoc 93, volume 1, pages 53-59, 19ème conférence européenne sur les communications optiques, 12-16 septembre à Montreux, Suisse), suivi d'un étage de commutation qui oriente les informations STM1 en transit ou vers la voie extraction puis insertion. L'aspect démultiplexage d'une telle solution est décrit dans un article intitulé "Fiber Amplifiers in Closer-Ring WDM Networks" de A.F. Elrefaie, S. Zaidi (Electronics letters, 3 décembre 1992, volume 28, pages 2340-2341). L'aspect matrice de commutation est décrit dans différentes notices commerciales (JDS, DICON, ...). Une telle matrice peut être réalisée en technologie électromagnétique ou en optique intégrée sur LiNbO3, InP, Si...

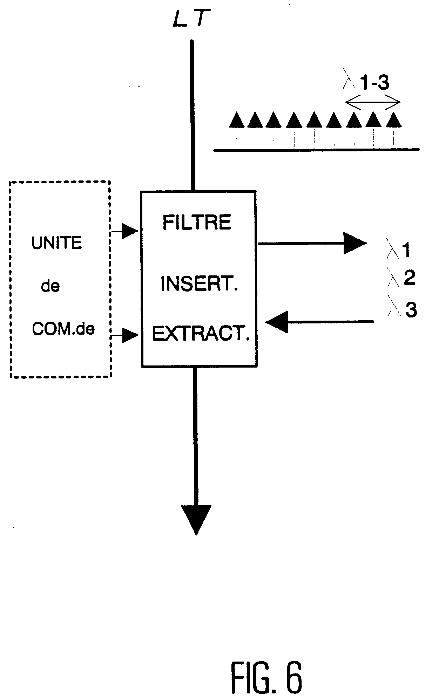

Une autre solution technologique est un filtre optique qui laisse passer les longueurs d'onde en transit et prélève les longueurs d'onde destinées à l'extraction, comme représenté sur la figure 6. Il assure également la fonction insertion. Les composants passifs qui permettent d'assurer cette fonction extraction-insertion d'une longueur d'onde sont les filtres multidiélectriques qui ont une largeur de transmission de quelques nm et les filtres à réseau de Bragg photoinscrit tel que décrit dans l'article intitulé "Compact all Fibers Narrowband Transmission Filter Using Bragg Gratings" de F. Bilodeau, B, Malo et al (ECOC 93, volume 3, pages 29-32).

D'autres composants permettent d'extraire puis d'insérer plusieurs longueurs d'onde en configuration accordable. C'est notamment le cas du filtre acousto-optique en optique intégrée sur LiNbO3 qui a fait l'objet de plusieurs publications, et notamment les articles intitulés "Multiwavelength Performance of an Apodized Acousto-Optic Switch" de J.E. Baran, D.A. Smith et A. d'Alessandro (Bellcore Optical Fiber Communication, 20-24 février 1994, San Jose, pages 57-58) et "Polarisation-Independent Low-Power Integrated Acousto-Optic Tunable Filter/Switch Using APE/Ti Polarisation Splitters on Lithium Nitrate" de A. d'Alessandro, D.A. Smith, J.E. Baran (Electronics Letters, 30 Septembre 93, volume 29, pages 1767-1768).

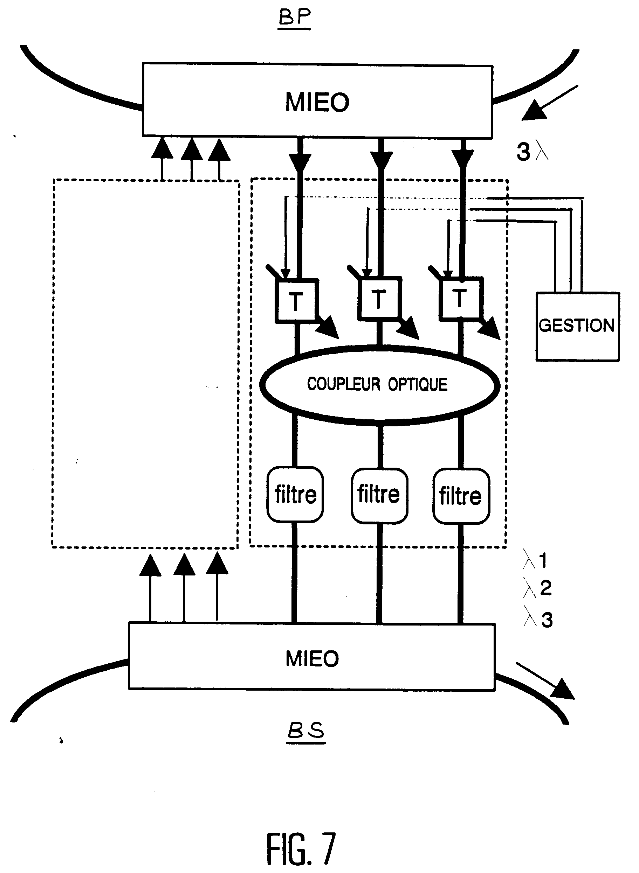

On a décrit les composants optiques de la figure 4. La fonction brasseur peut être en technologie électronique suivie d'émetteurs optiques qui envoient les informations aux longueurs d'onde assignées aux stations, comme représenté sur la figure 3. Ces équipements sont développés actuellement pour la transmission de la HNS. Ils assurent le traitement des informations (notamment la gestion des erreurs au niveau du surdébit de trame) et celles-ci sont réparties de manière à ce que toutes les informations destinées à la station S1 soient regroupées dans une trame STM1 qui est émise à la longueur d'onde $\lambda 1$. On obtient ainsi une standardisation des longueurs d'onde pour les boucles secondaires. Les mêmes longueurs d'onde sont utilisées dans les différentes boucles secondaires. Cette solution est compatible avec la norme de transmission HNS en ce qui concerne la mise à jour des informations contenues dans les surdébits. Mais il y a une autre solution optique qui est un répartiteur optique à base d'amplificateurs à semiconducteurs, comme représenté sur la figure 7. Ce répartiteur permet un aiguillage spectral des affluents, une visibilité des signaux qui sont en transit grâce à la fonction détection qui lui est associée et la fonctionnalité de transposition de longueur d'onde. La fonction détection permet d'accéder aux informations qui sont contenues dans le surdébit et notamment de lire l'adresse de routage du signal par exemple STM1 qui est en transit. Cette information est alors exploitée pour colorer le signal à la longueur d'onde de la station destinatrice. Ce répartiteur assure ainsi une fonction d'aiguillage reconfigurable selon les informations fournies par le gestionnaire du réseau et l'adresse de routage. Cette souplesse peut être exploitée pour établir une liaison circuit entre le réseau et une station en fonction des besoins ou pour avoir des ressources supplémentaires qui sont disponibles pour la sécurisation de la boucle. On peut dans ce cas assurer une protection à 100 % de la boucle contre une panne de noeud si le trafic qui passait dans le noeud N1 peut être transféré sur le noeud N2. Cela implique de doubler la capacité des noeuds ainsi que les accès à la boucle au niveau du noeud, ce qui pénalise le bilan de liaison.

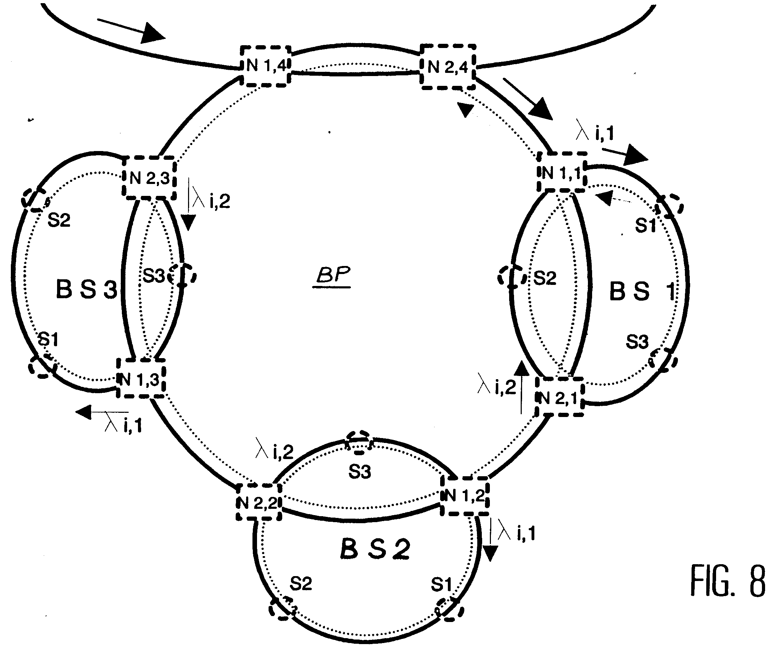

La figure 8 décrit une architecture de réseau avec une boucle principale BP et trois boucles secondaires BS. Chaque boucle secondaire a deux points d'accès à la boucle principale. Le fonctionnement des boucles secondaires a été décrit précédemment. La fonction interconnexion a pour but d'organiser les informations prélevées sur la boucle principale afin de les colorer à la longueur d'onde de la station destinatrice. L'interconnexion de chaque boucle secondaire à la boucle principale se fait avec la solution électronique ou optique. Dans la solution électronique, l'organisation peut descendre au niveau des affluents 2 Mbit/s ; les informations émises d'un noeud sous une longueur d'onde peuvent provenir du réseau général et des autres boucles secondaires. Pour deux noeuds, il y a deux longueurs d'ondes par station et interconnexion totale. Dans la solution optique, nous nous limiterons, pour la réflexion, au niveau STM1 mais on peut techniquement descendre au niveau 2 Mbit/s. Le trafic qui vient du réseau général vers les boucles secondaires est géré selon le fonctionnement d'une boucle secondaire à deux points d'accès. Mais il y a également du trafic entre les boucles secondaires qui nécessite d'établir une liaison circuit entre par exemple la station S1 de la boucle secondaire BS3 et la station S3 de la boucle secondaire BS1. Dans ce but, chaque station dispose d'au moins une longueur d'onde supplémentaire. L'affluent est émis sous la longueur $\lambda 1$ jusqu'au noeud $N_{2,3}$. A ce niveau, la détection de l'adresse indique d'affecter une longueur d'onde de la boucle principale qui est destinée au noeud $N_{1,1}$ ou $N_{2,1}$ selon les disponibilités, par exemple la longueur d'onde $\lambda_{1,1}^b$. L'information circule sous cette longueur d'onde sur la boucle principale jusqu'au noeud $N_{1,1}$ où il est extrait. A la traversée du répartiteur, le décodage de son adresse donne l'information de destination (station S3) et il est alors coloré sous la longueur d'onde prévue par cette station soit $\lambda 3$. Grâce à la fonctionnalité des MIEO (multiplexeurs à insertion et extraction optique), la voie retour utilise les mêmes longueurs d'onde.

Afin de permettre une mise en communication permanente d'une station Si avec le réseau général et une mise en communication de cette station avec une autre station d'une boucle secondaire, chaque station doit disposer de deux longueurs d'onde:

- $\lambda i^a$ pour les informations reçues du réseau général;
- $\lambda i^b$ pour les informations échangées avec une autre station d'une boucle secondaire.

Dans la solution répartiteur optique c'est la configuration minimale qui semble retenue pour des applications de réseau de transmission de télécommunications. Le nombre de longueurs d'onde qu'il faut prévoir par station dépend du taux d'interconnexion recherché. Cette valeur se répercute sur le nombre de longueurs d'onde circulant sur la boucle principale. Dans la configuration de la figure 8, l'affectation d'une longueur d'onde par station assure une interconnexion à une hauteur de 17 % et cela entraîne l'utilisation de cinq longueurs d'onde supplémentaires sur la boucle principale. Une interconnexion des stations à hauteur de 33 % entraîne l'affectation de deux longueurs d'onde par station et la présence sur la boucle principale de neuf longueurs d'onde. Par extension à un réseau comprenant N boucles secondaires autour d'une boucle principale où chaque boucle secondaire a n stations, une interconnexion totale des stations sur la base d'un même débit STM1 par exemple, entraîne $n^2N(N-1)/2\lambda$. Pour n=3 et N=3, cela donne vingt sept longueurs d'onde pour assurer une interconnexion totale. Ce nombre de longueurs d'onde peut être réduit par un regroupement des informations émises par une boucle secondaire sur une seule longueur d'onde à un débit plus élevé (STM4) au niveau de la boucle principale. Cela revient à interconnecter les boucles secondaires et cela nécessite trois longueurs d'onde pour trois boucles (pour N boucles, $N(N-1)/2$).

Sur la boucle principale, circulent les longueurs d'onde pour assurer l'interconnexion et il y a également les longueurs d'onde pour assurer le trafic entre le réseau général et les stations des boucles secondaires, ce qui correspond à dix huit longueurs d'onde pour l'exemple de la figure 8. L'anneau principal comprend une boucle normale et une boucle de secours pour éviter une coupure en cas de rupture simple d'artère.

Si le nombre de longueurs d'onde est élevé, on peut adopter une boucle principale pour le trafic entre le réseau et les boucles secondaires, et une autre boucle principale pour le trafic d'interconnexion entre les stations des boucles secondaires.

On va à présent étudier un exemple de réalisation expérimentale.

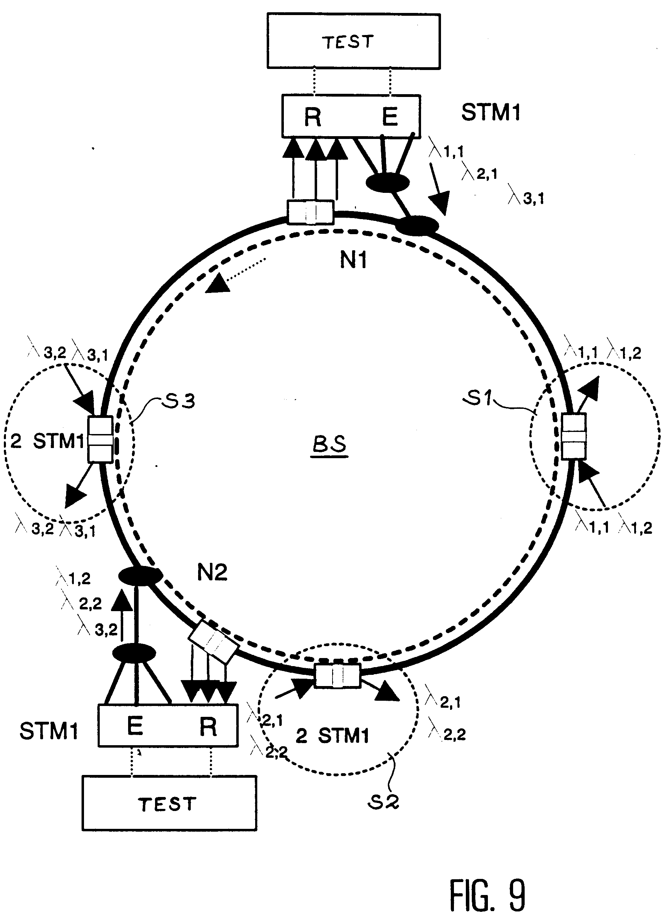

Un bilan de liaison est établi selon le schéma de la figure 9. les six sources optiques sont des diodes laser DFB qui sont placées sur la ligne de transmission avec une distance entre canaux de 2 nm (valeurs 1546, 1548, 1550, 1552, 1554, 1556 nm). Chaque longueur d'onde transporte un signal STM1. Le noeud est réduit à un coupleur optique 4*4 (pertes 7 dB) et des filtres pour l'extraction. Au niveau du noeud N1, trois longueurs d'onde sont envoyées dans la boucle secondaire par un coupleur 2*1 sur la fibre normale et la fibre secours et les trois autres longueurs d'onde sont injectées au niveau du noeud N2. Les pertes (7 dB) peuvent être réduites à environ 2 dB par l'installation d'un multiplexeur optique. Au niveau des stations, l'extraction et l'insertion des longueurs d'onde est obtenu par un filtre optique à réseau de Bragg photoinscrit. La perte d'insertion est d'environ 2 dB et la largeur à mi-hauteur de 0,5 nm permet de traiter des canaux séparés de 2 nm. La voie retour est assurée au niveau des stations par un laser DFB positionné à la longueur d'onde spécifiée. Pour tenir compte des marges systèmes, des dérives en température, du vieillissement,..., selon la recommandation G957 du CCITT, le seuil de détection retenu est de -39 dBm. Une jarretière optique est prévue à l'entrée et à la sortie des stations et des noeuds (pertes 1 dB). La plus grande portée optique sur la fibre normale correspond à la voie $\lambda_{3,1}$ entre le noeud 1 et la station 3, ainsi que $\lambda_{2,2}$ entre le noeud 2 et la station 2. Avec les paramètres retenus, on obtient une taille de boucle de 24 km avec émission à 0 dBm et 96 km avec une émission à +15 dBm (amplificateur optique à l'émission pour $\lambda_{3,1}$ et $\lambda_{2,2}$). L'installation d'un multiplexeur optique aux noeuds augmente la taille de la boucle de 19 km.

L'invention ainsi décrite peut avoir de nombreuses applications possibles:

- application aux télécommunications sur fibre optique, aux réseaux de transmission qui ont une architecture en boucle avec la norme de transmission HNS ou avec une autre norme de transmission, par exemple ATM, qui fait appel à des cellules et au routage spectral;
- application au réseau de transmission de France Telecom à deux niveaux de boucles comme le réseau intra-ZAA (réseau de jonctions et réseau de desserte) ou au réseau sectoriel et réseau de jonctions;
- application aux réseaux informatiques et à d'autres types de réseaux à support optique.

## Revendications

1. Architecture de réseau en boucle de transmission à accès multiple par routage spectral comprenant un réseau relié à au moins une boucle secondaire (BS), au moins deux stations (S1, S2) réparties sur chaque boucle secondaire (BS) récupérant leurs informations par l'extraction et l'insertion d'au moins une longueur d'onde qui leur est assignée, caractérisée en ce que chaque boucle secondaire (BS), qui est une boucle optique fermée, a deux noeuds d'accès (N1, N2) sur une ligne de transmission (LT) ou un arc d'une boucle principale du réseau, et des stations (S1, S2), recevant un flux d'informations à partir de ces noeuds d'accès (N1, N2), avec une capacité de trafic d'au moins un affluent par station, et en ce que le trafic de chaque boucle secondaire (BS) est réparti entre ces deux noeuds d'accès (N1, N2), qui sont installés en des endroits quelconques sur celle-ci.

2. Architecture selon la revendication 1, caractérisée en ce qu'elle comprend au moins une boucle principale (BP) et au moins deux boucles secondaires (BS) ayant toutes deux au moins un noeud d'accès (N1) à la boucle principale.

3. Architecture selon la revendication 2, caractérisée en ce que chaque station de chaque boucle secondaire (BS) dispose d'au moins deux longueurs d'onde.

4. Architecture selon la revendication 3, caractérisée ce qu'elle comprend une boucle principale pour le trafic entre le réseau et les boucles secondaires (BS) et une seconde boucle principale pour le trafic d'interconnexion entre les stations des boucles secondaires (BS).

5. Architecture selon la revendication 2, caractérisé en ce qu'elle possède deux noeuds (N1, N2) implantés entre deux stations.

6. Architecture selon l'une quelconque des revendications précédentes, caractérisée en ce que chaque boucle principale ou secondaire dispose d'une boucle de secours.

FIG. 1

FIG. 2

FIG. 3

EP 0 677 935 A1

FIG. 4

*LT*

1-3

▲▲▲▲▲▲▲▲▲

Demult.

UNITE

de

·COM.de

X

1

2

3

X

Multiplexeur

1-3

▲▲▲▲▲▲▲▲▲

FIG. 5

FIG. 6

FIG. 7

FIG. 8

FIG. 9

Office européen
des brevets

**RAPPORT DE RECHERCHE EUROPEENNE**

Numero de la demande

EP 95 40 0819

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int.Cl.6) |
| Y | ICC'93,<br>vol. 2, 23 Mai 1993 GENEVA CH,<br>pages 1245-1251, XP 000371271<br>ELREFAIE 'Multiwavelength Survivable Ring<br>Network Architectures'<br>* page 1246, colonne de droite, ligne 21 -<br>ligne 29 *<br>* page 1247, colonne de droite, ligne 16 -<br>ligne 37; figures 6,9 *<br>--- | 1-6 | H04J14/02<br>H04L12/437<br>H04J3/08 |
| Y | INTERNATIONAL CONFERENCE ON INTEGRATED<br>BROADBAND SERVICES AND NETWORKS,<br>15 Octobre 1990 LONDON, GB,<br>pages 63-67, XP 000410579<br>HILL ET AL. 'Applications of wavelength<br>routing in a core telecommunication<br>network'<br>* page 63, colonne de gauche, alinéa 2 *<br>* page 65, colonne de gauche, ligne 19 -<br>page 66, colonne de gauche, ligne 21;<br>figures 1,4-7 *<br>--- | 1-6 | |
| A | COMMUTATION ET TRANSMISSION,<br>vol. 15, no. 4, Octobre 1993 PARIS FR,<br>pages 5-12, XP 000041466<br>M. WEHR 'Protection des réseaux de<br>transmission synchrone'<br>* page 7, colonne de droite, alinéa 5 *<br>* page 8, colonne de droite, alinéa 3 -<br>page 9, colonne de gauche, alinéa 1 *<br>* page 9, colonne du milieu, ligne 48 -<br>ligne 66; figures 2,6 *<br>--- | 1-6 | **DOMAINES TECHNIQUES RECHERCHES (Int.Cl.6)**<br><br>H04J<br>H04B |

-/--

Le présent rapport a été établi pour toutes les revendications

| Lieu de la recherche | Date d'achèvement de la recherche | Examinateur |
|---|---|---|
| LA HAYE | 21 Juillet 1995 | Pieper, T |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................
& : membre de la même famille, document correspondant

EPO FORM 1503 03.82 (P04C02)

# EP 0 677 935 A1

**Office européen des brevets**

## RAPPORT DE RECHERCHE EUROPEENNE

Numero de la demande

EP 95 40 0819

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PROCEEDINGS OF THE NATIONAL COMMUNICATIONS FORUM, vol. 45, 30 Septembre 1991 CHICAGO US, pages 524-532, XP 000267442 W. KREMER 'SONET Bidirectional Line-Switched Rings' * page 525, colonne de gauche, ligne 19 - ligne 45 * * page 525, colonne de droite, ligne 19 - ligne 34; figures 2,8 * | 1,5,6 | |
| A | GLOBECOM '91; XP332856, vol. 2, 2 Décembre 1991 PHOENIX, US, pages 1240-1245, XP 000332856 K.W. CHEUNG 'Scalable, fault-tolerant 1-hop wavelength routing networks' * page 1241, colonne de gauche, ligne 36 - ligne 48 * * page 1242, colonne de droite, ligne 23 - page 1243, colonne de gauche, ligne 32; figures 1,2A,2B,5,7 * | 1-4 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 21 Juillet 1995 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)